# EUROPÄISCHE PATENTANMELDUNG

(11) **EP 1 696 306 A1**
(43) Veröffentlichungstag der Anmeldung: **30.08.2006**
(21) Anmeldenummer: 05004144.1
(22) Anmeldetag: 25.02.2005
(51) Int. Cl.: G06F 3/033, H04N 5/74, G06F 1/16

(54) **Mobiles Endgerät mit skalierbarer Anzeige**

(71) Anmelder: SIEMENS AKTIENGESELLSCHAFT, 80333 München (DE)
(72) Erfinder: Jarczyk, Alexander, Dr., 85356 Freising (DE); Keller, Roland, 81543 München (DE)

(57) **Zusammenfassung**

Die Erfindung betrifft ein mobiles Endgerät mit einer interaktiven Anzeigeeinrichtung. Erfindungsgemäß sind eine schwenkbar ausgebildete Projektionseinrichtung für ein in seiner Grösse veränderbares Projektionsdisplay, und Mittel zur Positions- und / oder Bewegungserkennung für das Projektionsdisplay vorgesehen.

## Beschreibung

Die Erfindung betrifft ein mobiles Endgerät gemäß dem Oberbegriff des Patentanspruchs 1.

Solche mobile Endgeräte sind beispielsweise Mobilfunkgeräte, PDAs (Personal Digital Assistant) oder Mischformen aus diesen beiden Geräten wie die so genannten Smartphones. Diese Endgeräte ermöglichen dem Benutzer eine Vielzahl unterschiedlicher Benutzungsarten, die vom Telefonieren, mit oder ohne Kamera, bis zu vergleichsweise komplexen Eingaben für Zeichen- und / oder Kalkulationsprogramme reichen.

Diese Endgeräte weisen oftmals interaktive Anzeigeeinrichtungen auf, über die eine Ausgabe von Informationen und auch eine Eingabe von Befehlen möglich ist. Eine Ausführungsform hierfür sind beispielsweise Touchscreens. Die interaktive Anzeigeeinrichtung kann auch als Eingabe- Ausgabe-Schnittstelle verstanden werden.

Weiter sind Projektionsdisplays bekannt, bei denen mit einem Miniprojektor ein entsprechendes Bild projeziert werden kann. Zur Positionserfassung oder Bewegungserkennung können Kameras mit einer entsprechenden Bildverarbeitungs-Software eingesetzt werden.

Für die eingangs beschriebenen Anforderungen ist eine skalierbare beziehungsweise anpassbare Gehäuseform der Endgeräte wünschenswert. Allgemein besteht das Problem der Skalierung der Gehäuseform und Größe, und dabei insbesondere der Displaygröße, an den entsprechenden Benutzungsfall. Beispielsweise bei der Benutzung eines Mobiltelefons treten verschiedene Situationen auf:
a. einhändiges Telefonieren und Schreiben von Kurznachrichten,
b. zweihändiges Notieren von Informationen während des Telefonierens im Stehen, beispielsweise in der S-Bahn, und im Sitzen ohne Schreibtisch o.ä.,
c. zweihändiges Notieren von Informationen während des Telefonierens im Sitzen am Schreibtisch o.ä.

Für diese Benutzungsarten liegt heute noch keine Skalierungsmöglichkeit vor. Entweder sind die Geräte so groß wie ein PDA, dann sind sie eher unbrauchbar als Einhand-Mobiletelefon. Oder aber sie sind klein genug, dann sind sie eher unbrauchbar als Geräte für die Eingabe von Text über einen Stift.

Clamshells, Slider-Phones und Klapp-Organizer können höchstens zwei verschiedene Gehäusezustände durch das Freigeben eines kleinen und eines großen LCD Display wahlweise einnehmen. Weiter sind Geräte bekannt, die zwar zwei verschiedene Größen einer Tastatur dem Benutzer bereitstellen, die Größe des Displays ändert sich dabei aber nicht.

Der Erfindung liegt die Aufgabe zugrunde, ein Endgerät der eingangs genannten Art anzugeben, das hinsichtlich der Grösse seines interaktiven Anzeigedisplays skalierbar ist.

Diese Aufgabe wird erfindungsgemäß durch die im Patentanspruch 1 angegebenen Merkmale gelöst.

Im Folgenden wird die Erfindung an Hand eines in der Zeichnung dargestellten Ausführungsbeispieles beschrieben. Dabei zeigen:
- Figur 1: ein Mobilfunkgerät mit einem interaktiven Display in einer ersten Grösse,
- Figur 2: dito in einer zweiten Grösse,
- Figur 3: dito in einer dritten Grösse, und
- Figur 4: die Veränderung zwischen den verschiedenen Grössen.

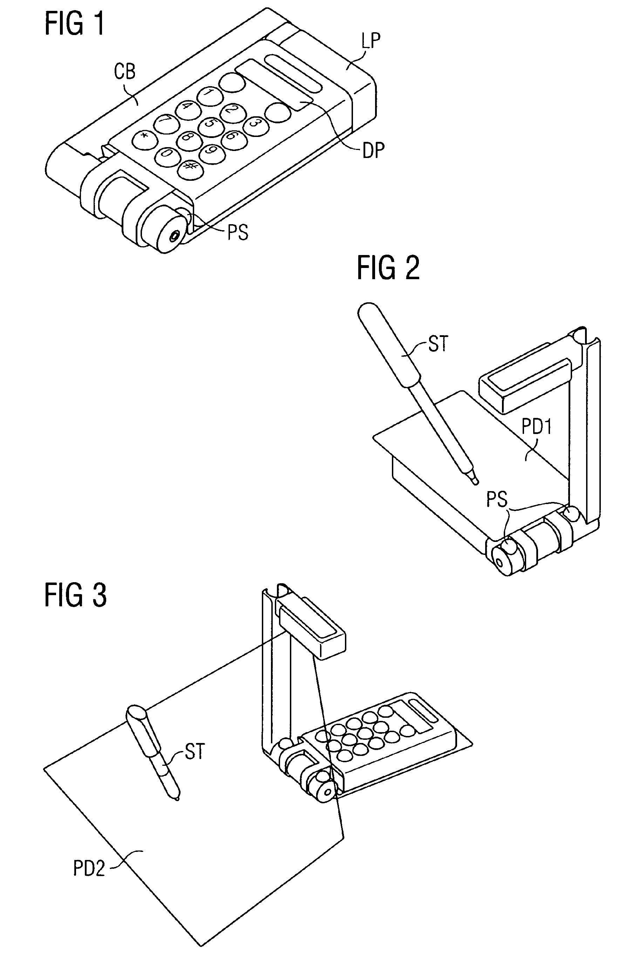

Die Grundidee der Erfindung geht aus von einem mobilen Endgerät, beispielsweise reinem Mobilfunkgerät (siehe MF in Figur 1) oder Smartphone. Das Endgerät weist erfindungsgemäß einen Schwenkbügel (siehe CB in Figur 1) auf, über den eine Projektionseinrichtung (siehe LP in Figur 1) mit dem Mobilfunkgerät verbunden ist. Die Projektionseinrichtung dient zur Erzeugung eines in seiner Grösse veränderlichen Projektionsdisplays (siehe DP beziehungsweise PDx in Figur 1). Weiter weist das Mobilfunkgerät Mittel zur Positions- und / oder Bewegungserkennung auf für Eingaben beziehungsweise Bewegungen auf dem Projektionsdisplay. Als Eingabemittel sind ein Stift oder mehrere Stifte oder ein oder mehrere Finger möglich.

Das Projektionsdisplay kann verschiedene Grössen annehmen. Hierauf wird später an Hand der detaillierten Beschreibung näher eingegangen. Als Mittel zur Positions- und / oder Bewegungserkennung kann beispielsweise eine Kamera vorgesehen sein.

In Figur 1 ist ein Mobilfunkgerät MF dargestellt, das seitlich einen Schwenkbügel CB aufweist. Der Bügel CB ist beispielsweise C-förmig ausgebildet und weist an einem Ende einen Laserprojektor LP auf. Das andere Ende bildet eine Drehachse, über die der Bügel CB um das Gehäuse des Mobilfunkgerätes MF drehbar ist. An diesem Ende weist der Bügel CB bei einer Alternative zu Kamera einen oder mehrere Positionssensoren PS auf.

Beispielhaft werden unterschiedliche Grössen des Projektionsdisplays auf Grund verschiedener Stellungen des Schwenkbügels "CB" beschrieben. Die vorliegende Erfindung ermöglicht in einer Weiterbildung des Grundgedankens ein "Umschalten" zwischen insgesamt drei verschiedenen Gehäuseformen.

Die in Figur 1 dargestellte Position des Bügels CB ermöglicht eine einhändige Bedienung des Mobilfunkgerätes MF als Candy Bar. Hier strahlt das Licht des Projektions-Systems LP in das Gehäuse des Gerätes MF und erleuchtet ein Display DP. Die hierzu notwendigen Spiegel sind für die Erfindung von untergeordneter Bedeutung und nicht näher dargestellt.

Die in Figur 2 dargestellte Position des Bügels CB ermöglicht eine zweihändige Bedienung im Stehen beziehungsweise ohne Unterlage für das Gerät MF. Der Bügel CB befindet sich in einer Position, in der der Projektor LP eine Rückseite des Gerätes MF beleuchtet. Hier wird ein Projektionsdisplay PD1 erzeugt.

Die in Figur 3 dargestellte Position des Bügels CB ermöglicht die einhändige oder zweihändige Bedienung des Gerätes MF mit deutlich vergrößerter Displayfläche relativ zur Figur 2. Hier leuchtet der Projektor LP auf eine vor dem Gerät MF befindlichen Fläche und bildet das Projektionsdisplay PD2.

Das erfindungsgemäße Mobilfunkgerät MF ermöglicht durch die Anordnung der verschiedenen Komponenten und der daraus resultierenden Rotation des Projektors LP unterschiedlich große Displays, DP, PD1 und PD2.

Bei einer Ausgestaltung der Erfindung sind die Sensoren PS derart am Bügel CB angeordnet, so dass sie bei jedem Display DP, PD1, PD2 die entsprechende Fläche erfassen. Die Drehbewegung des Bügels CB erfolgt dabei inklusive seiner Sensoren PS.

Die Sensoren PS können beispielsweise durch Ultraschall-Sensoren realisiert sein. Diese dienen vorzugsweise zur Erfassung der Position eines Ultraschall-Stiftes ST (siehe Figuren 2 und 3).

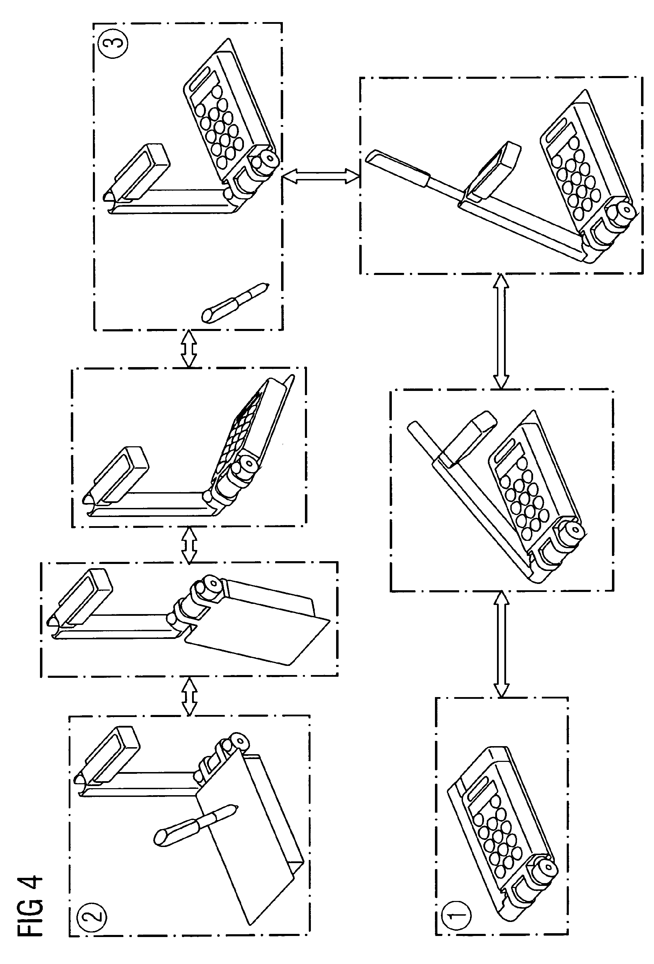

Die Erfindung und die einzelnen Ausgestaltungen beziehungsweise Weiterbildungen bieten folgende Vorteile, die insbesondere an Hand der Figur 4 erläutert werden..
a. die starre Anordnung des Stiftpositionserkennungssystems (z.B. Ultraschall-Sensoren) relativ zum C-förmigen Träger beziehungsweise Bügels CB der Projektionseinrichtung PD1 beziehungsweise PD2. Hierbei ist nur einmal eine Kalibrierung notwendig, da sich beim Klappen des Trägers keine räumliche Veränderung der Sensoren zum Projektionsdisplay PD ergibt.
b. die starre Anordnung des Projektionseinrichtung LP. Hierbei kann man sich speziell bei der Transformation des Gerätes MF von Situation 2 in 3 (siehe Figur 4) und zurück den C-Bügel CB als fix im Raum aufgehängt vorstellen. Sodann wird das Gerät MF gegen diesen Bügel CB gedreht, während die Projektion unverändert erfolgt. Hieraus folgt eine Projektion auf die Rückseite des Gerätes MF in Situation 2 und dieselbe auf den Tisch in Situation 3. Hierbei wird die Projektionsfläche so auf die zur Verfügung stehende Fläche optimiert, dass in Situation 2 nur das Gerät und in Situation 3 (bei Bedarf) die maximale Fläche (Trapez) projiziert wird.
c. Ein bedarfsweise vorgesehener Schalter (nicht explizit dargestellt) im C-Bügel CB detektiert dessen Stellung relativ zum Gerät MF. In Situation 1 wird dadurch die Projektion beziehungsweise die Applikation aus- und in Situation 2 und 3 eingeschaltet. Weiter wird dadurch beispielsweise eine variable Freisprecheinrichtung aktiviert. Die Stromversorgung und damit der Betrieb des Stiftpositionserkennungssystems wird ebenfalls in Situation 1 aus- und in Situation 2 und 3 eingeschaltet (Stromersparnis). Ebenfalls mit dem Schalter kann in Situation 2 und eventuell in Situation 3 das kleine Display ab- und in Situation S1 eingeschaltet werden. In diesem Fall ist das Display DP ein eigenständiges Display und nicht eine Einspiegelung von der Projektionseinrichtung LP.

## Patentansprüche

1. Mobiles Endgerät mit einer interaktiven Anzeigeeinrichtung,
**gekennzeichnet durch**
eine schwenkbar ausgebildete Projektionseinrichtung für ein in seiner Grösse veränderbares Projektionsdisplay, und Mittel zur Positions- und / oder Bewegungserkennung für das Projektionsdisplay.

2. Endgerät nach Anspruch 1,
**dadurch gekennzeichnet dass**
ein Erfassungsbereich für die Mittel mit dem Projektionsdisplay örtlich gekoppelt ist.

3. Endgerät nach einem der vorhergehenden Ansprüche,
**dadurch gekennzeichnet dass**
die Projektionseinrichtung und die Mittel an einem gemeinsamen Schwenkarm angeordnet sind, der zumindest teilweise um das Endgerät herum schwenkbar ist.
